# EUROPÄISCHE PATENTSCHRIFT

(11) **EP 3 385 592 B1**
(45) Veröffentlichungstag und Bekanntmachung des Hinweises auf die Patenterteilung: **30.10.2019**
(21) Anmeldenummer: 18152205.3
(22) Anmeldetag: 18.01.2018
(51) Int. Cl.: F16L 41/08, F16L 41/12, F16L 47/28, F16L 47/32

(54) **GASDICHTE KUNSTSTOFF-ROHRABZWEIGUNG**
GAS-TIGHT PLASTIC PIPE BRANCH
DÉRIVATION EN MATIÈRE PLASTIQUE ÉTANCHE AU GAZ

(30) Priorität: 28.03.2017 DE 102017205225
(43) Veröffentlichungstag der Anmeldung: 10.10.2018
(73) Patentinhaber: ContiTech Kühner GmbH & Cie. KG, 71570 Oppenweiler (DE)
(72) Erfinder: Messerschmidt, Jonathan, 71540 Murrhardt (DE)
(74) Vertreter: Finger, Karsten

(56) Entgegenhaltungen:
- DE-A1-102013 101 109
- DE-U1-202008 013 039

## Beschreibung

Die Erfindung betrifft eine gasdichte Kunststoff-Rohrabzweigung, aufweisend einen ersten Rohrleitungsabschnitt und einen zweiten Rohrleitungsabschnitt.

Gasdichte Rohrabzweigungen sind häufig geschweißt oder geklebt. Außerdem sind auch vorgefertigte T- oder Y-Stücke bekannt, an die die weiterführenden Kunststoff-Rohrabschnitte ansteckbar, anschraubbar oder auch wieder anklebbar oder anschweißbar sind.

In der DE 17 200 36 U ist eine eingeschweißte Rohrabzweigung offenbart, bei der zur Vermeidung vorzeitigen Versagens die durch die Schweißung verursachte Schwächung der Rohrleitung verstärkende Auflagen Verwendung finden. Diese sind jedoch selbst auch wieder auf die Rohre geschweißt.

Diese Art der Verbindung ist trotz relativ hohen Aufwands anfällig gegen Schweiß fehler, so das eine Gasdichtheit problematisch sein kann.

In der DE 172 03 89 U ist eine Abzweigung an Kunststoffrohren offenbart, bei der die Schweißung nicht direkt an der Kontaktstelle zwischen den Rohren, sondern an einer übergestülpten Verstärkungsmuffe vorgenommen wurde. Dies verstärkt zwar die Verbindung, kann jedoch auch die Gefahr von Undichtigkeiten bei Schweiß fehlern nicht aufheben.

Das Dokument DE202008013039U offenbart ein anderes Beispiel von Rohrabzweigung mit einer Schweißnaht.

In der DE 184 16 81 U ist ein Rohrverbindungsstück offenbart, das als Kombination aus einem spritzgegossenen Zentralteil mit angeklebten Ergänzungsstücken ausgebildet ist. Hier ist die eigentliche Abzweigung zwar als ein gesamtheitliches Teil ausgeführt, jedoch müssen hier weitere Bauteile angefügt werden, wobei dann wieder bei der Klebeverbindung Undichtigkeiten auftreten können.

Insbesondere für die Applikation von Füllventilen, Drucksensoren oder ähnlichem sind die bekannten Verfahren dementsprechend nicht optimal.

Der Erfindung liegt die Aufgabe zugrunde, eine Rohrabzweigung der geschilderten Art derart umzugestalten, dass eine sichere gasdichte Verbindung der Abzweigstelle gegeben ist.

Diese Aufgabe wird dadurch gelöst, dass
- der erste Rohrleitungsabschnitt eine Abzweigbohrung aufweist und
- der zweite Rohrleitungsabschnitt einen rohrförmigen Absatz mit einer endseitigen Kontur aufweist, wobei die endseitige Kontur in die Abzweigbohrung des ersten Rohrleitungsabschnitts hineinsteckbar ist,
wobei bei eingesteckter endseitiger Kontur des zweiten Rohrleitungsabschnitts in die Abzweigbohrung des ersten Rohrleitungsabschnitts erster und zweiter Rohrleitungsabschnitt mit dem rohrförmigen Absatz in einem vorbestimmten Bereich um die Abzweigung herum mit einem Kunststoffmaterial umspritzt sind, wobei das Kunststoffmaterial eine Schmelztemperatur aufweist, die geringfügig höher ist, als die Schmelztemperatur der Rohrleitungsabschnitte und, so dass eine stoffschlüssige Verbindung zwischen den Rohrleitungsabschnitten und dem umspritzten Kunststoffmaterial herstellbar ist.

Durch eine geeignete Materialpaarung zwischen den Kunststoffmaterialien der Rohrleitungsabschnitte und dem der Umspritzung sind die Oberflächen der Rohrleitungsabschnitte durch das Material der Umspritzung bei Spritztemperatur anschmelzbar, so dass beim Erkalten eine stoffschlüssige Verbindung erzielbar ist. Dadurch ist die Gasdichtheit durch die Umspritzung gegeben. Eine gasdichte Schweißung oder Klebung ist nicht erforderlich. Die Umspritzung mit Kunststoff sorgt für einen guten Halt der beiden Rohrleitungsabschnitte zueinander.

In einer Weiterbildung der Erfindung weist die endseitige Kontur des zweiten Rohrleitungsabschnitts eine Aufnahme für ein Dichtelement auf, in der ein Dichtelement angeordnet ist, wobei das Dichtelement bei eingesteckter Kontur des zweiten Rohrleitungsabschnitts in die Abzweigbohrung des ersten Rohrleitungsabschnitts derart zwischen dem ersten Rohrleitungsabschnitt und dem zweiten Rohrleitungsabschnitt zu liegen kommt, dass die eingesteckte Kontur gegen die Abzweigbohrung abgedichtet ist..

Das Dichtelement verbessert die Dichtwirkung der Abzweigung, so dass eine höhere Sicherheit gegen Leckagen gegeben ist.

In einer Weiterbildung der Erfindung weist der rohrförmige Absatz des zweiten Rohrleitungsabschnitts zusätzlich mindestens ein Verankerungselement auf und ist das Verankerungselement im Wesentlichen vollständig mit dem Kunststoffmaterial umspritzt.

In einer Weiterbildung der Erfindung ist das Verankerungselement als radial von dem rohrförmigen Absatz des zweiten Rohrleitungsabschnitts abragendes Formelement ausgebildet und ist das abragende Formelement im Wesentlichen vollständig mit dem Kunststoffmaterial umspritzt.

Ein derartiges Verankerungselement ist nach dem Umspritzen der Verbindung in dem umspritzten Kunststoff formschlüssig eingebettet. Es erhöht die Festigkeit der Verbindung, sodass eine hohe formschlüssige Sicherheit gegen ein unbeabsichtigtes Lösen der Verbindung gegeben ist.

In einer Weiterbildung der Erfindung weist das Kunststoffmaterial der Umspritzung einen vorbestimmten Schrumpf bei der Abkühlung auf.

Durch einen derartigen Schrumpf sind die Rohrleitungsabschnitte bei der Abkühlung der Umspritzung gegeneinander pressbar, was die Sicherheit für die Gasdichtheit nochmals verbessert.

Anhand der Zeichnung wird nachstehend ein Beispiel der Erfindung näher erläutert.

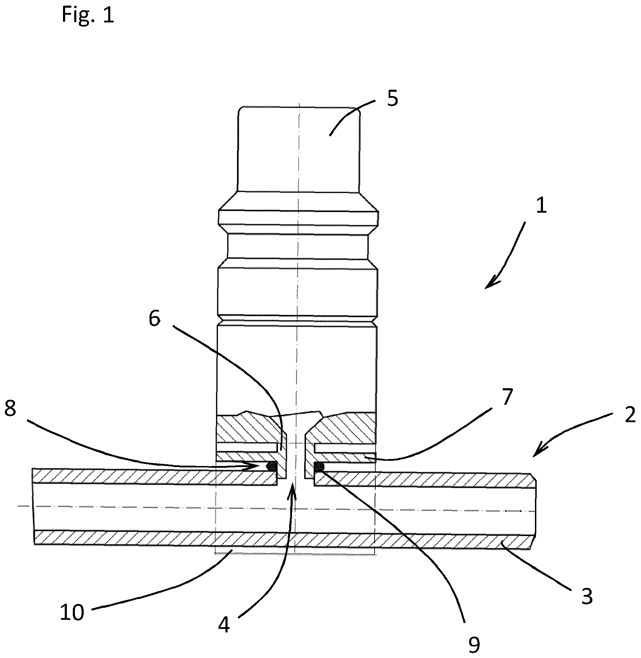

Die Fig. 1 zeigt eine erfindungsgemäße Rohrabzweigung 1 in einem Teillängsschnitt. Ein erster Rohrabschnitts 2 weist eine Wand 3 aus Kunststoff auf, in die eine Abzweigbohrung 4 eingebracht ist.

Ein aus Kunststoff bestehendes Füllventil 5 weist einen rohrförmigen Absatz 6 auf. Am Absatz 6 ist ein vom rohrförmigen Absatz 6 abragendes Verankerungselement 7 angeordnet.

Weiter weist der rohrförmige Absatz 6 eine endseitigen Kontur 8 auf, die in die Abzweigbohrung 4 des ersten Rohrleitungsabschnitts 2 eingepasst ist. Auf der endseitigen Kontur 8 ist eine Dichtung 9 angeordnet, die zwischen dem Verankerungselement 7 und der Wandung 3 des ersten Rohrleitungsabschnitts 2 eingeklemmt ist. Die Dichtung 9 sorgt für eine gasdichte Abdichtung zwischen dem rohrförmigen Absatz 6 und dem Rohrleitungsabschnitts 2 im Bereich der Abzweigbohrung 4 unkt

Um den Rohrleitungsabschnitts 2 herum ist eine Kunststoffumspritzung 10 angeordnet, die auch den aus der Bohrung 4 herausragenden Teil des rohrförmigen Absatzes 6, das Verankerungselement 7 und die Dichtung 9 umgreift und eine Schmelztemperatur aufweist, die geringfügig höher ist, als die Schmelztemperatur der Rohrleitungsabschnitte 2 und 5 und die beim Erkalten einen vorbestimmten Schrumpf aufweist. Dadurch sind die Rohrleitungsabschnitte 2 und 5 durch die Umspritzung 10 angeschmolzen, so dass eine stoffschlüssige Verbindung der Rohrleitungsabschnitte 2 und 5 mit der Umspritzung 10 besteht. Schon allein dadurch ist eine Gasdichtheit gegeben, die Dichtung 9 dient hier nur zur Erhöhung der Sicherheit gegen Undichtigkeiten. Durch den Schrumpf ist die Dichtung 9 zwischen dem Rohrleitungsabschnitts 2, der Kontur 8 und dem Verankerungselement 7 eingepresst.

Die gezeigte Anordnung weist eine hohe Sicherheit gegen unbeabsichtigte Trennung des Füllventils 5 vom Rohrleitungsabschnitts 2 bei gleichzeitig sicherer Gasdichtheit auf.

### Bezugszeichenliste

### (Teil der Beschreibung)

- 1: Rohrabzweigung
- 2: erster Rohrleitungsabschnitt
- 3: Wand des ersten Rohrabschnitts 2
- 4: Abzweigbohrung in der Wand 3
- 5: Füllventil, zweiter Rohrleitungsabschnitt
- 6: rohrförmiger Absatz des Füllventils 5
- 7: Verankerungselement am rohrförmigen Absatz 6
- 8: endseitigen Kontur des Absatzes 6
- 9: Dichtung
- 10: Kunststoffumspritzung, Kunststoffmaterial

## Patentansprüche

1. Gasdichte Kunststoff-Rohrabzweigung (1) aufweisend einen ersten Rohrleitungsabschnitt (2) und einen zweiten Rohrleitungsabschnitt (5), wobei
- der erste Rohrleitungsabschnitt (2) eine Abzweigbohrung (4) aufweist und
- der zweite Rohrleitungsabschnitt (5) einen rohrförmigen Absatz (6) mit einer endseitigen Kontur (8) aufweist, wobei die endseitige Kontur (8) in die Abzweigbohrung (4) des ersten Rohrleitungsabschnitts (2) hineinsteckbar ist,
**dadurch gekennzeichnet, dass** bei eingesteckter endseitiger Kontur (8) des zweiten Rohrleitungsabschnitts (5) in die Abzweigbohrung (4) des ersten Rohrleitungsabschnitts (2) erster (2) und zweiter (5) Rohrleitungsabschnitt mit dem rohrförmigen Absatz (6) in einem vorbestimmten Bereich (10) um die Abzweigung (1) herum mit einem Kunststoffmaterial (10) umspritzt sind, wobei das Kunststoffmaterial (10) eine Schmelztemperatur aufweist, die geringfügig höher ist, als die Schmelztemperatur der Rohrleitungsabschnitte 2 und 5, so dass eine stoffschlüssige Verbindung zwischen den Rohrleitungsabschnitten (2, 5) und dem umspritzten Kunststoffmaterial (10) herstellbar ist.

2. Gasdichte Kunststoff-Rohrabzweigung (1) nach Anspruch 1, **dadurch gekennzeichnet, dass** die endseitige Kontur (8) des zweiten Rohrleitungsabschnitts (5) eine Aufnahme für ein Dichtelement (9) aufweist, in der ein Dichtelement (9) angeordnet ist, wobei das Dichtelement (9) bei eingesteckter Kontur (8) des zweiten Rohrleitungsabschnitts (5) in die Abzweigbohrung (4) des ersten Rohrleitungsabschnitts (2) derart zwischen dem ersten Rohrleitungsabschnitt (2) und dem zweiten Rohrleitungsabschnitt (5) zu liegen kommt, dass die eingesteckte Kontur (8) gegen die Abzweigbohrung (4) abgedichtet ist.

3. Gasdichte Kunststoff-Rohrabzweigung (1) nach Anspruch 1 oder 2, **dadurch gekennzeichnet, dass** der rohrförmige Absatz (8) des zweiten Rohrleitungsabschnitts zusätzlich mindestens ein Verankerungselement (7) aufweist und auch das Verankerungselement (7) im Wesentlichen vollständig mit dem Kunststoffmaterial (10) umspritzt ist.

4. Gasdichte Kunststoff-Rohrabzweigung (1) nach Anspruch 3, **dadurch gekennzeichnet, dass** das Verankerungselement (7) als radial vom rohrförmigen Absatz (8) des zweiten Rohrleitungsabschnitts (5) abragendes Formelement (7) ausgebildet ist und auch das abragende Formelement (7) im Wesentlichen vollständig mit dem Kunststoffmaterial (10) umspritzt ist.

5. Gasdichte Kunststoff-Rohrabzweigung (1) nach mindestens einem der vorstehenden Ansprüche, **dadurch gekennzeichnet, dass** das Kunststoffmaterial (10) der Umspritzung einen vorbestimmten Schrumpf bei der Abkühlung aufweist.

## Claims

1. Gas-tight plastic pipe junction (1) having a first pipeline section (2) and having a second pipeline section (5), wherein
- the first pipeline section (2) has a junction bore (4), and
- the second pipeline section (5) has a tubular shoulder (6) with an end-side contour (8), wherein the end-side contour (8) is able to be inserted into the junction bore (4) of the first pipeline section (2),
**characterized in that**,
with the end-side contour (8) of the second pipeline section (5) inserted into the junction bore (4) of the first pipeline section (2), the first (2) pipeline section and the second (5) pipeline section, with the tubular shoulder (6), are, in a predetermined region (10) around the junction (1), encapsulated with a plastic material (10), wherein the plastic material (10) has a melting temperature which is slightly higher than the melting temperature of the pipeline sections (2) and (5), such that a cohesive connection is able to be produced between the pipeline sections (2, 5) and the encapsulating plastic material (10).

2. Gas-tight plastic pipe junction (1) according to Claim 1, **characterized in that** the end-side contour (8) of the second pipeline section (5) has a receiving part for a sealing element (9) in which a sealing element (9) is arranged, wherein, with the contour (8) of the second pipeline section (5) inserted into the junction bore (4) of the first pipeline section (2), the sealing element (9) comes to be situated between the first pipeline section (2) and the second pipeline section (5) such that the inserted contour (8) is sealed off with respect to the junction bore (4).

3. Gas-tight plastic pipe junction (1) according to Claim 1 or 2, **characterized in that** the tubular shoulder (8) of the second pipeline section additionally has at least one anchoring element (7), and the anchoring element (7) is also substantially completely encapsulated with the plastic material (10) .

4. Gas-tight plastic pipe junction (1) according to Claim 3, **characterized in that** the anchoring element (7) is formed as a shaped element (7) projecting radially from the tubular shoulder (8) of the second pipeline section (5), and the projecting shaped element (7) is also substantially completely encapsulated with the plastic material (10).

5. Gas-tight plastic pipe junction (1) according to at least one of the preceding claims, **characterized in that** the plastic material (10) of the encapsulation has a predetermined shrinkage during the cooling.

## Revendications

1. Pièce d'embranchement de tuyau (1) étanche aux gaz en matière synthétique comprenant une première portion de canalisation (2) et une deuxième portion de canalisation (5),
- la première portion de canalisation (2) comportant un perçage d'embranchement (4) et
- la deuxième portion de canalisation (5) comportant un talon tubulaire (6) pourvu d'un contour d'extrémité (8), le contour d'extrémité (8) pouvant être inséré dans le perçage d'embranchement (4) de la première portion de canalisation (2),
**caractérisée en ce que**
lorsque le contour d'extrémité (8) de la deuxième portions de canalisation (5) est inséré dans le perçage d'embranchement (4) de la première portion de canalisation (2), des première (2) et deuxième (5) portion de canalisations pourvues du talon tubulaire (6) sont enrobées avec une matière synthétique (10) dans une zone prédéterminée (10) autour de la pièce d'embranchement (1), la matière synthétique (10) ayant une température de fusion légèrement supérieure à la température de fusion des portions de canalisations 2 et 5 de manière à pouvoir établir une liaison de matière entre les portions de canalisations (2, 5) et la matière synthétique d'enrobage (10).

2. Pièce d'embranchement de tuyau (1) étanche aux gaz en matière synthétique selon la revendication 1, **caractérisée en ce que** le contour d'extrémité (8) de la deuxième portion de canalisation (5) comporte un logement qui est destiné à un élément d'étanchéité (9) et dans lequel est disposé un élément d'étanchéité (9), l'élément d'étanchéité (9) venant se placer, lorsque le contour (8) de la deuxième portion de canalisation (5) est inséré dans le perçage d'embranchement (4) de la première portion de canalisation (2), entre la première portion de canalisation (2) et la deuxième portion de canalisation (5) de telle sorte que le contour inséré (8) soit rendu étanche par rapport au perçage d'embranchement (4).

3. Pièce d'embranchement de tuyau (1) étanche aux gaz en matière synthétique selon la revendication 1 ou 2, **caractérisée en ce que** le talon tubulaire (8) de la deuxième portion de canalisation comprend en outre au moins un élément d'ancrage (7) et l'élément d'ancrage (7) est enrobé sensiblement complètement avec la matière synthétique (10).

4. Pièce d'embranchement de tuyau (1) étanche aux gaz en matière synthétique selon la revendication 3, **caractérisée en ce que** l'élément d'ancrage (7) est conçu comme un élément moulé (7) saillant radialement du talon tubulaire (8) de la deuxième portion de canalisation (5) et l'élément moulé saillant (7) est également enrobé sensiblement complètement avec la matière synthétique (10).

5. Pièce d'embranchement de tuyau (1) étanche aux gaz en matière synthétique selon l'une au moins des revendications précédentes, **caractérisé en ce que** la matière synthétique (10) de l'enrobage présente un rétrécissement prédéterminé lors du refroidissement.
